Europäisches Patentamt

European Patent Office

Office européen des brevets

(11) Numéro de publication : **0 060 161**
**B1**

(12) **FASCICULE DE BREVET EUROPÉEN**

(45) Date de publication du fascicule du brevet :
24.04.85

(51) Int. Cl.⁴ : **B 23 P 19/00, B 21 D 53/26**

(21) Numéro de dépôt : **82400261.2**

(22) Date de dépôt : **15.02.82**

(54) **Procédé de conformage d'un élément de boîtier de servomoteur avec son renfort.**

(30) Priorité : **19.02.81 FR 8103271**

(43) Date de publication de la demande :
**15.09.82 Bulletin 82/37**

(45) Mention de la délivrance du brevet :
**24.04.85 Bulletin 85/17**

(84) Etats contractants désignés :
**BE DE GB IT NL SE**

(56) Documents cités :
**EP-A- 0 021 969**
**DE-A- 2 129 547**
**DE-A- 2 224 027**
**FR-A- 2 139 613**
**FR-A- 2 182 150**
**US-A- 2 696 240**

(73) Titulaire : **SOCIETE ANONYME D.B.A.**
**Centre Paris Pleyel**
**F-93521 St-Denis Cedex 01 (FR)**

(72) Inventeur : **Carré, Jean-Jacques**
**59 Bld de l'Est**
**F-93340 Le Raincy (FR)**
Inventeur : **Levral, Roland**
**9 bis avenue Monmousseau**
**F-93240 Stains (FR)**

(74) Mandataire : **Poidatz, Emmanuel et al**
**Service Brevets Bendix 44 rue François 1er**
**F-75008 Paris (FR)**

Jouve, 18, rue St-Denis, 75001 Paris, France

## Description

L'invention concerne un procédé de conformage d'un élément de boîtier de servo-moteur d'assistance au freinage, notamment un servomoteur du type à dépression et a plus particulièrement pour objet le montage d'un renfort interne à cet élément de boîtier, destiné à supporter et répartir les efforts d'arrachement s'exerçant sur les vis de fixation.

Un servo-moteur auquel s'applique l'invention se compose généralement de deux éléments de boîtier ou coquilles abritant un piston moteur séparant l'intérieur du boîtier en deux chambres, l'une des chambres étant destinée à être connectée à une source de vide disponible sur le véhicule (la dépression dans le collecteur d'admission du moteur, par exemple) tandis que l'autre chambre peut être alternativement mise en communication avec la première chambre ou avec l'atmosphère. Un mécanisme formant vanne à trois voies, actionné par une tige de commande relié à la pédale de frein, permet cette commutation. La mise en communication de la seconde chambre avec l'atmosphère entraîne un déplacement du piston moteur, pour l'actionnement d'un maître-cylindre de freinage. Il est classique de monter le maître cylindre à l'une des extrémités axiales du boîtier du servo-moteur et de fixer l'ensemble à une paroi fixe du véhicule, par l'autre extrémité axiale du servo-moteur. Par conséquent, lorsqu'un effort de freinage est transmis axialement par la tige de commande, la réaction est transmise à la paroi fixe du véhicule par l'intermédiaire de l'ensemble du boîtier du servo-moteur. Les normes actuellement en vigueur excluent toute déformation permanente du boîtier dès la première application des freins.

D'autre part, il est connu de monter des vis de fixation, tant du côté du maître-cylindre que du côté de la paroi fixe de montage, en interposant un renfort à l'intérieur de chaque élément de boîtier, les têtes de vis reposant sur ce renfort et les parties filetées faisant saillies vers l'extérieur pour le montage du maître-cylindre ou du servomoteur respectif. Il est clair en effet que les efforts de réaction mentionnés ci-dessus passent par ces vis ; les renforts permettent donc d'éviter la déformation du boîtier et l'arrachement des vis, en répartissant ces efforts sur une large surface de chaque face axiale du boîtier. Les renforts trouvent en particulier toute leur utilité dans les servomoteurs les plus récents, à structure allégée, utilisant notamment des éléments de boîtier en aluminium ou matière plastique.

L'invention vise particulièrement un perfectionnement apporté au montage d'un tel renfort, dans le but d'éliminer toute élongation permanente ultérieure du boîtier (notamment à la mise en service du servomoteur) imputable à un mauvais positionnement du renfort par rapport à la paroi du boîtier avec laquelle il coopère.

Dans ce but, l'invention concerne un procédé de conformage d'un élément de boîtier de servomoteur d'assistance au freinage, comportant une virole d'assemblage périphérique et un fond plat annulaire de fixation reliés par un voile à profil évolutif, au moins un renfort annulaire étant destiné à être appliqué sur la face interne dudit fond annulaire, caractérisé en ce que, pour assurer une bonne coopération entre les parties en contact du fond et du renfort annulaire, il comporte les étapes suivantes :

— placer l'élément de boîtier préconformé en appui périphérique par sa virole sur un bâti annulaire fixe ;

— mettre en place le renfort annulaire sur la face interne du fond annulaire de l'élément de boîtier préconformé ; et

— appliquer sur le renfort mis en place sur le fond un effort contrôlé dirigé perpendiculairement au fond et vers l'extérieur de l'élément de boîtier pour effectuer un déplacement du fond à l'écart de la virole avec déformation permanente de l'élément de boîtier afin de conformer le voile de liaison dans sa forme et ses dimensions finales désirées.

Le procédé défini ci-dessus est particulièrement avantageux lorsque l'élément de boîtier concerné comporte un voile à profil optimisé (notamment à profil sensiblement parabolique), tel que décrit dans le document EP-A-0 021 969 au nom de la demanderesse, car, dans ce cas, les opérations caractéristiques mentionnées ci-dessus sont utilisées pour donner sa forme et ses dimensions définitives audit voile préalablement préformé à la presse.

Le document FR-A-2 182 150 décrit une machine pour le façonnage par emboutissage de roues d'automobiles constituées d'une jante et d'un voile de roue transversal soudé à cette jante, la machine étant agencée pour réaliser une compression radiale de la jante accompagnée d'une déformation axiale par une matrice de la portion centrale du voile pour en corriger la distorsion, alors que l'orifice central du voile est par ailleurs alésé.

L'invention sera mieux comprise et d'autres avantages de celle-ci apparaîtront mieux à la lumière de la description qui va suivre, donnée uniquement à titre d'exemple et faite en référence aux dessins annexés dans lesquels :

la figure 1 illustre schématiquement la mise en œuvre d'un procédé conforme au principe de l'invention ; et

les figures 2 et 3 illustrent la mise en œuvre d'une variante de ce procédé.

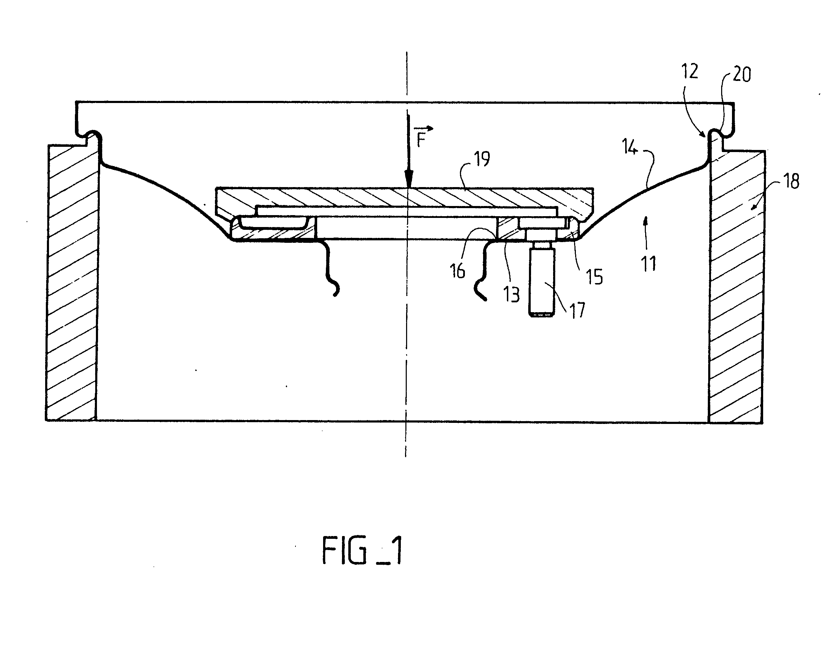

Sur la figure 1, on a représenté en coupe un élément de boîtier 11 de servomoteur, en position pour la mise en œuvre du procédé qui sera décrit ci-dessous. Cet élément de boîtier comporte une virole d'assemblage 12 pour le sertissage ultérieur à un autre élément de boîtier semblable, un fond plat 13 de fixation et un voile 14 reliant la virole 12 au fond plat 13. Dans l'exemple décrit, le profil final du voile 14 est sensiblement parabolique. Les avantages d'un tel voile ont été indiqués dans le document EP-A-0 021 969 sus-mentionné au nom de la demanderesse. En outre, un renfort annulaire 15 est appliqué sur la face interne 16 du fond 13 pour éviter la déformation de ce dernier au voisinage de vis de fixation 17 (pouvant aller jusqu'à l'arrachement des vis) sous l'effet des efforts de réaction engendrés au cours du freinage, comme expliqué plus haut.

Conformément à l'invention, la virole 12 est mise en appui sur un support périphérique 18 et on applique au renfort 15 en place sur la face interne 16 un effort de valeur prédéterminée, dirigé perpendiculairement à ladite face interne 16 et vers l'extérieur de l'élément du boîtier 11. Il est clair que ce que l'on définit comme l'extérieur de l'élément de boîtier est en fait l'extérieur du boîtier lui-même lorsqu'il est matérialisé par l'assemblage de deux éléments 11 semblables. L'application de l'effort se fait donc suivant le sens de la flèche F de la figure 1 et par l'intermédiaire d'un poussoir 19 en forme de disque évidé sur la partie centrale de l'une de ses faces de façon à coopérer essentiellement avec la périphérie du renfort 15.

L'application de l'effort précité a pour effet d'assurer une bonne coopération entre les parties en contact du renfort 15 et du fond 13. Il devra conduire à une déformation permanente de l'élément de boîtier, dans le sens axial, de quelques dixièmes de millimètre, mais cette déformation intervenant à ce stade de l'élaboration du boîtier permettra de garantir ultérieurement une déflexion parfaitement élastique du boîtier lors du freinage, ce qui correspond aux normes actuellement en vigueur. D'autre part, il est à noter que la virole 12 de l'élément de boîtier est mise en appui sur le support périphérique 18 par l'intermédiaire d'un bord rabattu 20 de celle-ci utilisable pour l'assemblage ultérieur de deux éléments de boîtier complémentaires. La mise en œuvre du procédé est donc particulièrement simple puisqu'on met à profit une particularité de structure déjà existante du boîtier pour le positionner pendant la mise en œuvre du procédé décrit ci-dessus.

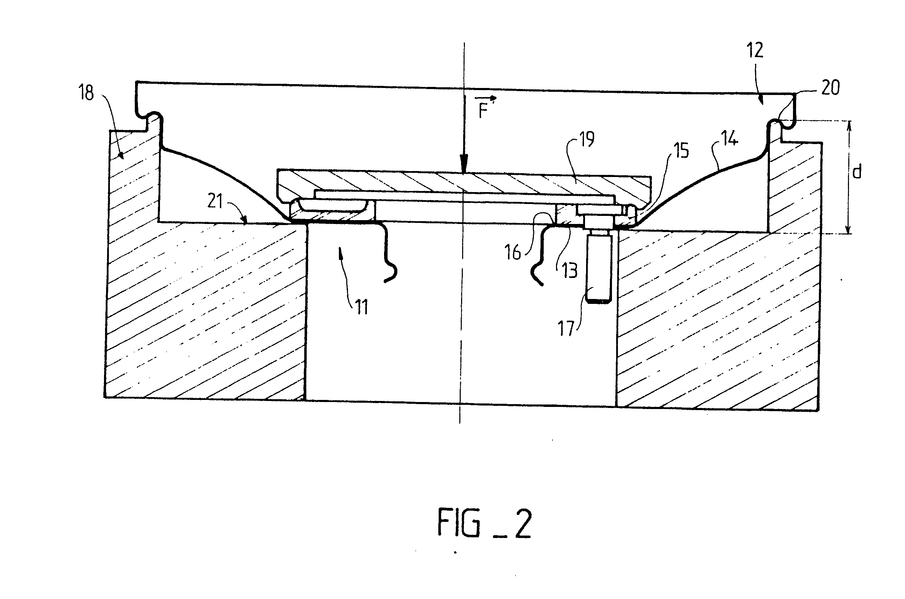

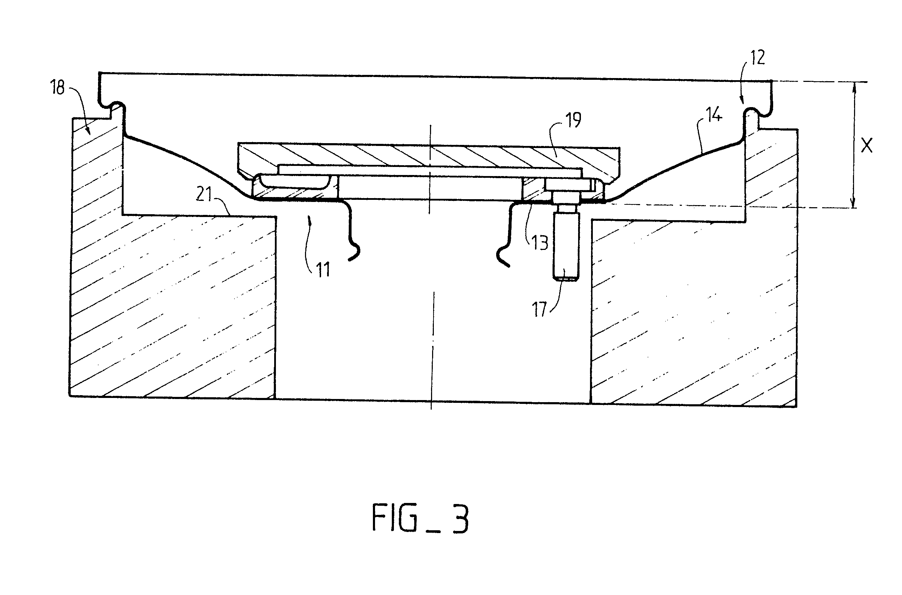

Dans le procédé décrit en référence aux figures 2 et 3, les éléments de structure analogue portent les mêmes références numériques que sur la figure 1. Le support périphérique 18 est cependant complété par une butée 21 à positionnement prédéterminé (c'est-à-dire que la surface de butée 21 est à une distance prédéterminée « d » de la zone d'appui définie par le support 18) sur laquelle le fond 13 est susceptible de venir s'appliquer sous l'action d'un effort F' exercé sur le renfort 15 dans les mêmes conditions que précédemment, c'est-à-dire par l'intermédiaire du poussoir 19. La valeur de l'effort F' est moins critique que dans le procédé décrit à la figure 1, il doit cependant être suffisant pour amener le fond 13 en contact effectif avec la butée 21. Cette variante est avantageuse dans la mesure où l'élément de boîtier 11 peut être préformé grossièrement à la presse, en deçà de sa forme finale désirée, avant la mise en œuvre du procédé décrit, ce qui permet de donner audit voile sa forme et ses dimensions définitives par l'opération consistant à amener le fond 13 en contact avec la butée 21. On a constaté que dans de telles conditions, l'encombrement axial final de l'élément de boîtier 11, après disparition de l'effort F' (distance « x » figure 3) était sensiblement mieux contrôlé à la production.

Bien entendu, l'invention n'est pas limitée aux deux variantes de procédé qui viennent d'être décrits. En particulier, il est parfaitement envisageable de supprimer le poussoir 19 et d'appliquer l'effort F' par l'intermédiaire des vis de fixation 17, c'est-à-dire soit en poussant exclusivement sur les têtes de vis soit en exerçant une traction sur les parties filetées de celles-ci. Dans ce dernier cas, on assurera même une meilleure coopération entre les têtes de vis et le renfort 15. C'est dire que l'invention couvre tous les équivalents techniques des moyens mis en jeu si ceux-ci le sont dans le cadre des revendications qui suivent.

## Revendications

1. Procédé de conformage d'un élément de boîtier (11) de servomoteur d'assistance au freinage, comportant une virole d'assemblage périphérique (12) et un fond plat annulaire (13) de fixation reliés par un voile (14) à profil évolutif, au moins un renfort annulaire (15) étant destiné à être appliqué sur la face interne (16) dudit fond annulaire, caractérisé en ce que, pour assurer une bonne coopération entre les parties en contact du fond (13) et du renfort annulaire (15), il comporte les étapes suivantes :
— Placer l'élément de boîtier (11) préconformé en appui périphérique par sa virole (12) sur un bâti annulaire fixe (18) ;
— Mettre en place le renfort annulaire (15) sur la face interne (16) du fond annulaire (13) de l'élément de boîtier préconformé (11) ; et
— Appliquer sur le renfort (15) mis en place sur le fond (13) un effort contrôlé (F, F') dirigé perpendiculairement au fond (13) et vers l'extérieur de l'élément de boîtier (11) pour effectuer un déplacement du fond (13) à l'écart de la virole (12) avec déformation permanente de l'élément de boîtier afin de conformer le voile de liaison (14) dans sa forme et ses dimensions finales désirées.

2. Procédé selon la revendication 1, caractérisé en ce qu'il comporte l'étape de disposer sur le trajet de déplacement axial du fond (13) sous l'effet de l'application dudit effort (F, F') une butée fixe réglable (21) limitant ce déplacement axial.

3. Procédé selon l'une des revendications précédentes, caractérisé en ce qu'il comprend l'étape de disposer sur le renfort annulaire (15) mis en place sur la face interne (16) du fond (12) de l'élément de boîtier (11) un poussoir (19) sur lequel est exercé l'effort d'application (F, F').

4. Procédé selon la revendication 3, caractérisé en ce que le poussoir (19) est conformé pour porter sur la périphérie du renfort (15).

5. Procédé selon l'une des revendications 1 et 2, pour un élément de boîtier (11) comportant des vis de fixation (17) dont les têtes sont en appui sur le renfort (15), caractérisé en ce qu'il comporte l'étape d'exercer l'effort d'application (F, F') sur les vis de fixation (17).

6. Procédé selon l'une des revendications précédentes, caractérisé en ce qu'il comprend l'étape de placer la virole (12) de l'élément de boîtier (11) en appui sur le bâti annulaire (18) par un bord rabattu (20) de la virole utilisable pour l'assemblage ultérieur de deux éléments de boîtier (11) complémentaires pour constituer un boîtier de servomoteur.

## Claims

1. A method of forming a casing element (11) for a brake servomotor, comprising a peripheral assembly rim (12) and a flat annular mounting base (13) connected by a wall (14) of a changeable profile, at least one annular reinforcement (15) being adapted to be placed upon the internal face (16) of said annular base, characterized in that for assuring a good cooperation between the portions in contact with the base (13) and the annular reinforcement (15) it comprises the following steps :
— placing the preformed casing element (11) by its rim (12) into peripheral contact with a fixed annular frame (18) ;
— placing the annular reinforcement (15) on the internal face (16) of the annular base (13) of the preformed casing element (11) ; and
— applying a controlled force (F, F') against the reinforcement (15) disposed on the base (13), said force being directed perpendicularly to the base (13) and towards the exterior of the casing element (11) for affecting a displacement of the base (13) away from the rim (12) with a permanent deformation of the casing element in order to have said wall (14) assume its desired final shape and dimensions.

2. A method according to claim 1, characterized in that it comprises the step of disposing a fixed controllable abutment (21) in the path of axial displacement of the base (13) under the influence of the application of said force (F, F') for limiting said axial displacement.

3. A method according to any of the preceding claims, characterized in that it comprises the step of disposing a push member (19) on the annular reinforcement (15) seated against the internal face (16) of the base (12) of the casing element (11), said force (F, F') being exerted upon said push member.

4. A method according to claim 3, characterized in that said push member (19) is formed to engage the periphery of the reinforcement (15).

5. A method according to any of claims 1 and 2 for a casing element (11) comprising mounting bolts (17) having heads in engagement with the reinforcement (15), characterized in that it comprises the step of exterting said force (F, F') upon the mounting bolts (17).

6. A method according to any of the preceding claims, characterized in that it comprises a step of placing the rim (12) of the casing element (11) in contact with the annular frame (18) by a rebent edge (20) of the rim to be used for the final assembly of a pair of complementary casing elements (11) for forming a servomotor casing.

## Patentansprüche

1. Verfahren zum Formen eines Gehäuseteils (11) für einen Bremsservomotor, mit einem zur Montage dienenden ringförmigen Außenabschnitt (12) und einem zur Befestigungs dienenden ringförmigen ebenen Bodenabschnitt (13), die durch eine Zwischenwand (14) veränderbaren Profils verbunden sind, wobei mindestens ein ringförmiges Verstärkungsstück (15) gegen die Innenseite (16) des ringförmigen Bodenabschnitts anlegbar ist, dadurch gekennzeichnet, daß es zum Zwecke eines guten Zusammenarbeitens der mit dem Bodenabschnitt (13) und dem ringförmigen Verstärkungsstück (15) in Berührung stehenden Abschnitte folgende Schritte aufweist :
— das vorgeformte Gehäuse (11) wird mit seinem Außenabschnitt (12) in Anlage mit einem ortsfesten ringförmigen Untersatz (18) gebracht ;
— das ringförmige Verstärkungsstück (15) wird auf die Innenseite (16) des ringförmigen Bodenabschnitts (13) des vorgeformten Gehäuseteils (11) gelegt ; und
— auf das am Bodenabschnitt (13) angeordnete Verstärkungsstück (15) wird eine kontrollierte Kraft (F, F') ausgeübt, die senkrecht zum Bodenabschnitt (13) und zur Außenseite des Gehäuseteils (11) gerichtet ist, um eine Verschiebung des Bodenabschnitts (13) weg vom Außenabschnitt (12) unter bleibender Verformung des Gehäuseteils hervorzurufen, um der Zwischenwand (14) ihre gewünschte Endform und -abmessung zu verleihen.

2. Verfahren nach Anspruch 1, dadurch gekennzeichnet, daß es folgende Schritte umfaßt : in den Weg der durch die aufgebrachte Kraft (F, F') hervorgerufenen axialen Verschiebung wird ein fester, regelbarer Anschlag (21) gesetzt, der diese axiale Verschiebung begrenzt.

3. Verfahren nach einem der vorhergehenden Ansprüche, dadurch gekennzeichnet, daß es folgende Schritte umfaßt : auf dem ringförmigen Verstärkungsstück (15), das auf der Innenseite (16) des Bodenabschnitts (12) des Gehäuseteils (11) sitzt, wird ein Stößel (19) angeordnet, auf den die besagte Kraft (F, F') ausgeübt wird.

4. Verfahren nach Anspruch 3, dadurch gekennzeichnet, daß der Stößel (19) so geformt ist, daß er am Außenrand des Verstärkungsstückes (15) anliegt.

5. Verfahren nach einem der Ansprüche 1 und 2 für ein Gehäuseteil (11) mit Befestigungsschrauben (17), deren Köpfe an dem Verstärkungsstück (15) angreifen, dadurch gekennzeichnet, daß es den folgenden Schritt umfaßt : die besagte Kraft (F, F') wird auf die Befestigungsschrauben (17) ausgeübt.

6. Verfahren nach einem der vorhergehenden Ansprüche, dadurch gekennzeichnet, daß es folgenden Schritt umfaßt : der Außenabschnitt (12) des Gehäuseteils (11) wird auf den ringförmigen Untersatz (18) mittels eines umgeschlagenen Randes (20) des Aussenabschnittes gelegt, der für die Endmontage zweier ein Servomotorgehäuse bildenden Komplementären Gehäuseteile (11) verwendbar ist.

FIG_1

FIG _ 2

FIG_3

0 060 161